# EUROPEAN PATENT APPLICATION

(11) **EP 4 831 629 A1**
(43) Date of publication of application: **28.10.2026**
(21) Application number: 24908356.9
(22) Date of filing: 18.12.2024
(51) Int. Cl.: G01N 23/2251, G01N 27/26, H01M 4/02

(54) **METHOD FOR PREDICTING ELECTROCHEMICAL PROPERTIES OF CATHODE ACTIVE MATERIAL FOR ALL-SOLID-STATE BATTERY**

(30) Priority: 18.12.2023 KR 20230185012
(71) Applicant: POSCO Holdings Inc., Pohang-si, Gyeongsangbuk-do 37859 (KR)
(72) Inventor: LEE, Jaemyung, Pohang-si, Gyeongsangbuk-do 37859 (KR); MOON, Jiwoong, Pohang-si, Gyeongsangbuk-do 37859 (KR); KIM, Tae Chil, Pohang-si, Gyeongsangbuk-do 37859 (KR); SONG, Sang Keun, Pohang-si, Gyeongsangbuk-do 37859 (KR); KIM, Woo Taek, Pohang-si, Gyeongsangbuk-do 37859 (KR)
(74) Representative: Pfenning, Meinig & Partner mbB
(86) International application number: PCT/KR2024/097130
(87) International publication number: WO 2025/136052

(57) **Abstract**

The present invention relates to a method for predicting electrochemical characteristics of a positive electrode active material for an all-solid-state battery, the method including: a first step of deriving an SEM (scanning electron microscope) image of the positive electrode active material for an all-solid-state battery in the form of secondary particles formed by aggregation of a plurality of primary particles; a second step of deriving, from the SEM image, an average radius of the primary particles and an average number of primary particles present in the secondary particle; a third step of deriving an average active area from the derived average radius of the primary particles and the average number of primary particles present in the secondary particle; and a fourth step of predicting rate characteristics of the all-solid-state battery from the derived average active area.

## Description

### [TECHNICAL FIELD]

The present invention relates to a method for predicting electrochemical characteristics of a positive electrode active material for an all-solid-state battery, and more specifically, to a method for predicting rate characteristics of an all-solid-state battery from visual information of a positive electrode active material for an all-solid-state battery.

### [BACKGROUND ART]

As research on safety problems and energy density of high-capacity batteries has attracted attention, all-solid-state batteries have been spotlighted as next-generation batteries. Since an all-solid-state battery replaces a liquid electrolyte, which may cause explosion, with a solid electrolyte, a flammable solvent is not used in the battery, and ignition or explosion due to reactions such as decomposition reactions of a conventional electrolyte solution does not occur at all, thereby securing safety of the battery. In addition, since lithium metal or a lithium alloy can be used as a negative electrode material, energy density with respect to the mass and volume of the battery can be improved.

An all-solid-state battery generally uses inorganic solid electrolyte powder as an electrolyte and, unlike a general lithium ion battery using a liquid electrolyte, characteristics thereof depend on a surface contact area between a positive electrode active material and an electrolyte, surface reaction characteristics, and whether physical surface contact is maintained after expansion/contraction during charging and discharging.

As described above, in an all-solid-state battery, a surface contact area between a positive electrode active material and a solid electrolyte, hereinafter referred to as an "active area" in the present specification, is an important physical property that determines electrochemical characteristics of the all-solid-state battery. However, a methodology capable of quantitatively analyzing the physical property has not yet been established. In addition, after manufacturing a positive electrode material for an all-solid-state battery, in order to select a positive electrode material of excellent quality, a method of directly assembling a cell and then evaluating electrochemical characteristics has conventionally been used. However, in this case, cell assembly and electrochemical characteristic evaluation must necessarily be accompanied, causing problems in terms of time and cost.

In particular, since a solid electrolyte generally has an issue of having lower ionic conductivity than a liquid electrolyte, research on quantitative physical properties of a positive electrode active material for an all-solid-state battery capable of maximizing rate characteristics is required.

### [DETAILED DESCRIPTION OF THE INVENTION]

### [Technical Problem]

Accordingly, one object of the present invention is to provide a method for predicting electrochemical characteristics of a positive electrode active material for an all-solid-state battery, which can quantitatively derive an active area between a positive electrode active material and a solid electrolyte from visual information of the positive electrode active material for an all-solid-state battery, and predict electrochemical characteristics, more specifically, rate characteristics, of the all-solid-state battery therefrom.

### [Technical Solution]

One embodiment of the present invention provides a method for predicting electrochemical characteristics of a positive electrode active material for an all-solid-state battery, the method including: a first step of deriving an SEM (scanning electron microscope) image of the positive electrode active material for an all-solid-state battery in the form of secondary particles formed by aggregation of a plurality of primary particles; a second step of deriving, from the SEM image, an average radius of the primary particles and an average number of primary particles present in the secondary particle; a third step of deriving an average active area from the derived average radius of the primary particles and the average number of primary particles present in the secondary particle; and a fourth step of predicting rate characteristics of the all-solid-state battery from the derived average active area.

In the second step, the derived average radius of the primary particles may be an area-based average radius calculated based on an area of the primary particles, or a perimeter-based average radius calculated based on a perimeter of the primary particles.

In the third step, the derived average active area may be a sphere-based average active area derived by assuming the primary particles to be spherical, a cube-based average active area derived by assuming the primary particles to be cubic, or a regular icosahedron-based average active area derived by assuming the primary particles to be regular icosahedral.

The fourth step may predict that the all-solid-state battery has excellent rate characteristics when the derived average active area is 50 µm² or more and equal to or less than a threshold value.

When the derived average radius of the primary particles is the area-based average radius and the derived average active area is the sphere-based average active area, the threshold value may be 110 µm².

When the derived average radius of the primary particles is the area-based average radius and the derived average active area is the cube-based average active area, the threshold value may be 104 µm².

When the derived average radius of the primary particles is the area-based average radius and the derived average active area is the regular icosahedron-based average active area, the threshold value may be 127 µm².

When the derived average radius of the primary particles is the perimeter-based average radius and the derived average active area is the sphere-based average active area, the threshold value may be 103 µm².

When the derived average radius of the primary particles is the perimeter-based average radius and the derived average active area is the cube-based average active area, the threshold value may be 98 µm².

When the derived average radius of the primary particles is the perimeter-based average radius and the derived average active area is the regular icosahedron-based average active area, the threshold value may be 120 µm².

An average particle diameter (D50) of the secondary particles may be 5 µm or less.

### [Advantageous Effects]

In the method for predicting electrochemical characteristics of a positive electrode active material for an all-solid-state battery according to one embodiment of the present invention, an active area can be derived from an SEM image of the positive electrode active material, which is visual information, and electrochemical characteristics, more specifically, rate characteristics, of the all-solid-state battery can be predicted therefrom. Accordingly, in a process of selecting a positive electrode material of excellent quality, it is not necessary to directly assemble a cell and evaluate electrochemical characteristics as in the conventional art, thereby reducing time and cost for product selection.

### [BRIEF DESCRIPTION OF THE DRAWINGS]

FIG. 1 is an example of an SEM image of a positive electrode active material derived from the first step.
FIG. 2 is an example of a software image showing a process of performing the second step.
FIG. 3 is an image showing a process of obtaining a sphere-based average active area in the third step.
FIG. 4 is an image showing a process of obtaining a cube-based average active area in the third step.
FIG. 5 is an image showing a process of obtaining a regular icosahedron-based average active area in the third step.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the phrases clearly indicate the contrary. As used in the specification, the meaning of "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless specifically stated otherwise, % means wt%, and 1 ppm is 0.0001 wt%.

In the present specification, the term "combination(s) thereof" described in a Markush-type expression means a mixture or combination of one or more selected from the group consisting of the components described in the Markush-type expression, and means including at least one selected from the group consisting of the components.

Hereinafter, embodiments of the present invention will be described in detail so that a person having ordinary skill in the art to which the present invention pertains can easily practice the present invention. However, the present invention may be implemented in various different forms and is not limited to the embodiments described herein.

An all-solid-state battery generally uses inorganic solid electrolyte powder as an electrolyte and, unlike a general lithium ion battery using a liquid electrolyte, characteristics thereof greatly depend on a surface contact area between a positive electrode active material and an electrolyte, surface reaction characteristics, and whether physical surface contact is maintained after expansion/contraction during charging and discharging.

As described above, in an all-solid-state battery, a surface contact area between a positive electrode active material and a solid electrolyte, hereinafter referred to as an "active area" in the present specification, is an important physical property that determines electrochemical characteristics of the all-solid-state battery. However, a methodology capable of quantitatively analyzing the physical property has not yet been established. In addition, after manufacturing a positive electrode material for an all-solid-state battery, in order to select a positive electrode material of excellent quality, a method of directly assembling a cell and then evaluating electrochemical characteristics has conventionally been used. However, in this case, cell assembly and electrochemical characteristic evaluation must necessarily be accompanied, causing problems in terms of time and cost.

In particular, since a solid electrolyte generally has an issue of having lower ionic conductivity than a liquid electrolyte, research on quantitative physical properties of a positive electrode active material for an all-solid-state battery capable of maximizing rate characteristics is required.

Accordingly, as a result of long-term research to establish criteria for selecting products having excellent electrochemical characteristics, particularly rate characteristics, of a positive electrode active material for an all-solid-state battery, the present inventors found a method capable of deriving an active area from an SEM (scanning electron microscope) image, which is visual information of a positive electrode active material, and predicting rate characteristics from a range of the derived active area, thereby completing the present invention. According to this, since direct cell assembly and electrochemical characteristic evaluation are not required for selecting a high-quality product as in the conventional art, time and cost for product selection can be significantly reduced.

Specifically, one embodiment of the present invention provides a method for predicting electrochemical characteristics of a positive electrode active material for an all-solid-state battery, the method including: a first step of deriving an SEM (scanning electron microscope) image of the positive electrode active material for an all-solid-state battery in the form of secondary particles formed by aggregation of a plurality of primary particles; a second step of deriving, from the SEM image, an average radius of the primary particles and an average number of primary particles present in the secondary particle; a third step of deriving an average active area from the derived average radius of the primary particles and the average number of primary particles present in the secondary particle; and a fourth step of predicting rate characteristics of the all-solid-state battery from the derived average active area.

Hereinafter, the method for predicting electrochemical characteristics of a positive electrode active material for an all-solid-state battery according to one embodiment of the present invention will be described in detail step by step.

### First Step

First, an SEM (scanning electron microscope) image of a positive electrode active material for an all-solid-state battery in the form of secondary particles formed by aggregation of a plurality of primary particles is derived.

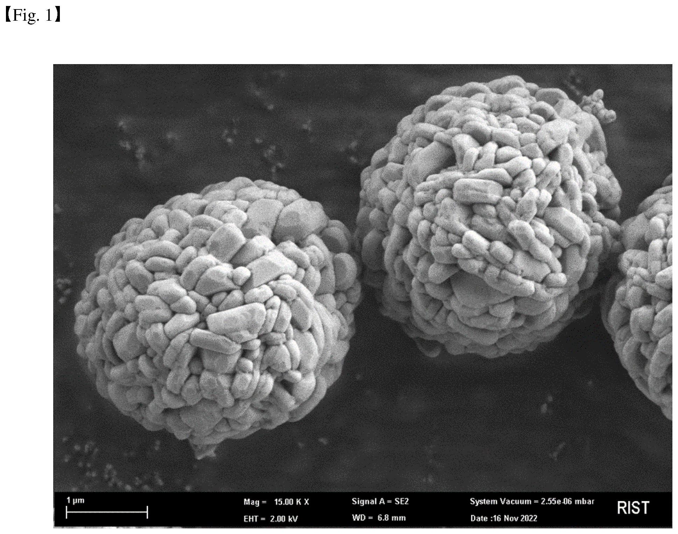

FIG. 1 is an example of an SEM image of a positive electrode active material derived from the first step.

Referring to FIG. 1, in the present specification, "secondary particle" means an aggregate, that is, a secondary structure, in which tens to hundreds of primary particles are aggregated by physical or chemical bonding between primary particles even without an intentional aggregation or granulation process for the primary particles. In addition, "primary particle" means a minimum particle unit distinguished as one lump when a cross-section of a positive electrode active material is observed through a scanning electron microscope (SEM), and may be composed of one crystal grain or a plurality of crystal grains. In addition, "crystal grain" means a distinguishable region in a primary particle in which atoms form a lattice structure in a certain direction.

Meanwhile, the positive electrode active material for an all-solid-state battery may include a lithium metal oxide. At this time, the type of lithium metal oxide is not particularly limited. For example, the lithium metal oxide may be a conventional nickel-based layered lithium metal oxide, a lithium-excess composition layered lithium metal oxide, an olivine-structured lithium iron phosphate oxide, a spinel-structured lithium manganese oxide, or the like, but is not necessarily limited thereto.

In addition, the specific composition of the lithium metal oxide is also not particularly limited.

Meanwhile, an average particle diameter (D50) of the secondary particles may be 2 to 7 µm, and more specifically 3 to 5.5 µm. When the average particle diameter (D50) of the secondary particles satisfies the above range, the result of predicting electrochemical characteristics of the positive electrode active material for an all-solid-state battery according to the present invention can be more accurately implemented. In the present specification, the average particle diameter (D50) may be defined as a particle diameter corresponding to 50% of a cumulative volume in a particle diameter distribution curve of particles. The average particle diameter (D50) may be measured, for example, using a laser diffraction method.

### Second Step

Next, from the SEM image, an average radius of primary particles and an average number of primary particles present in a secondary particle are derived.

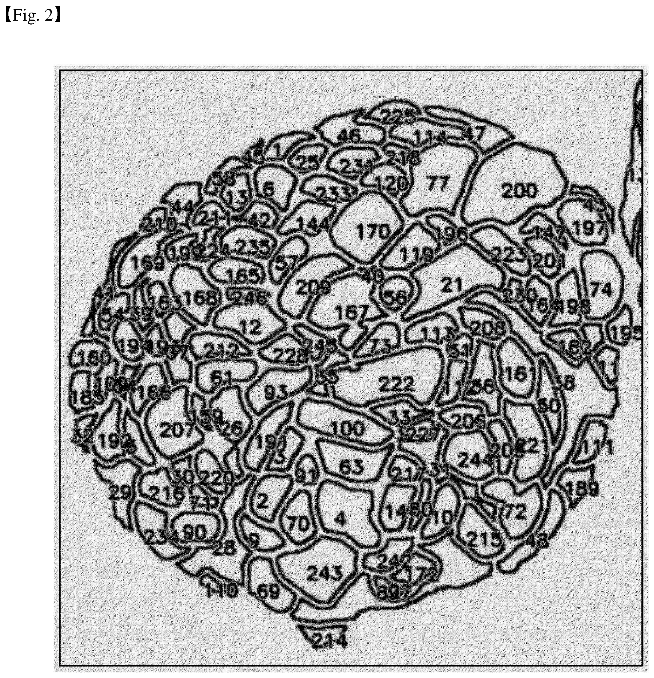

FIG. 2 is an example of a software image showing a process of performing the second step. Referring to FIG. 2, an image segmented into individual primary particle units may be derived by removing boundaries of individual primary particles in the secondary particle through image software and then detecting outlines of the individual primary particles. Through such a software image, an average radius of the primary particles and an average number of primary particles present in the secondary particle can be derived.

At this time, the derived average radius of the primary particles may be an area-based average radius calculated based on an area of the primary particles, or a perimeter-based average radius calculated based on a perimeter of the primary particles.

More specifically, the area-based average radius may be calculated by measuring, through image software, an area (pixel) occupied by each primary particle in the secondary particle in the SEM image derived from the first step, specifying a radius of a circle having the same area as the radius of each primary particle, and obtaining an average value of the radii of the individual primary particles in the secondary particle.

In addition, the perimeter-based average radius may be calculated by measuring, through image software, a perimeter of each primary particle in the secondary particle in the SEM image derived from the first step, specifying a radius of a circle having the same perimeter as the radius of each primary particle, and obtaining an average value of the radii of the individual primary particles in the secondary particle.

In addition, the average number of primary particles present in the secondary particle may be calculated from the SEM image derived from the first step through image software. At this time, the number of primary particles means the number of primary particles positioned at a surface portion of the positive electrode active material observed on a two-dimensional SEM image, and does not mean the number of all primary particles actually present in the three-dimensional positive electrode active material.

Meanwhile, the derived average radius of the primary particles and the average number of primary particles present in the secondary particle may be average values of values measured for 10 arbitrary different secondary particles in a positive electrode active material sample. Through this, measurement deviation and error can be reduced.

### Third Step

Next, an average active area is derived from the derived average radius of the primary particles and the average number of primary particles present in the secondary particle.

At this time, the derived average active area may be a sphere-based average active area derived by assuming the primary particles to be spherical, a cube-based average active area derived by assuming the primary particles to be cubic, or a regular icosahedron-based average active area derived by assuming the primary particles to be regular icosahedral.

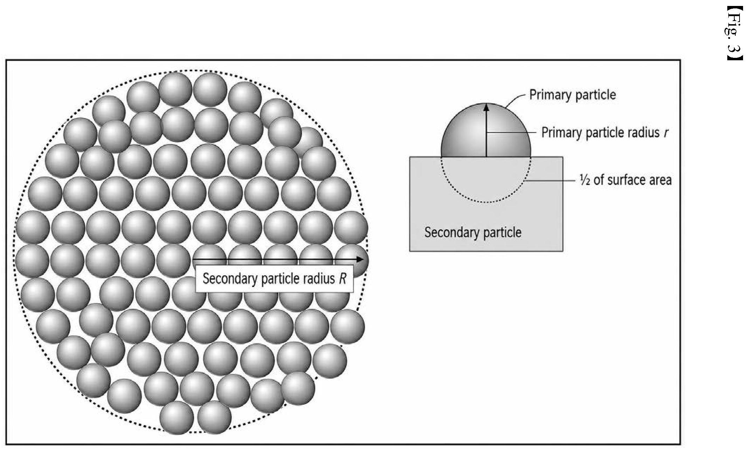

More specifically, FIG. 3 is a conceptual diagram showing a process of deriving a sphere-based average active area by assuming the primary particles to be spherical. Referring to FIG. 3, the sphere-based average active area may be calculated by the following method. First, the average radius of the primary particles derived from the second step is assumed to be the radius of a spherical particle. Then, half of the total area of the spherical particle is assumed to be an active area directly contacting the solid electrolyte. Then, the active area of each primary particle derived therefrom is multiplied by the average number of primary particles present in the secondary particle, thereby calculating the average active area of the positive electrode active material.

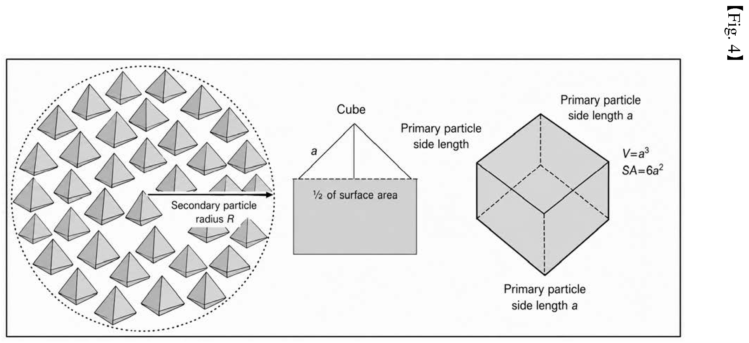

In addition, FIG. 4 is a conceptual diagram showing a process of deriving a cube-based average active area by assuming the primary particles to be cubic. Referring to FIG. 4, the cube-based average active area may be calculated by the following method. First, the average radius of the primary particles derived from the second step is assumed to be the length of one edge of a cube. Then, half of the total area of the cubic particle is assumed to be an active area directly contacting the solid electrolyte. Then, the active area of each primary particle derived therefrom is multiplied by the average number of primary particles present in the secondary particle, thereby calculating the average active area of the positive electrode active material.

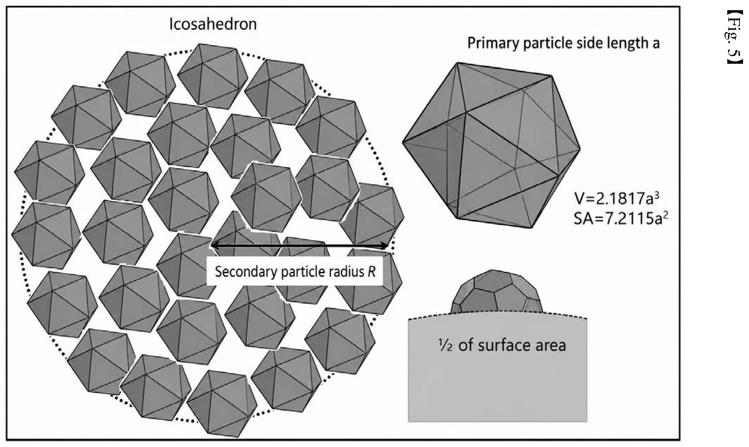

In addition, FIG. 5 is a conceptual diagram showing a process of deriving a regular icosahedron-based average active area by assuming the primary particles to be regular icosahedral. Referring to FIG. 5, the regular icosahedron-based average active area may be calculated by the following method. First, the average radius of the primary particles derived from the second step is assumed to be the length of one edge of a regular icosahedron. Then, half of the total area of the regular icosahedral particle is assumed to be an active area directly contacting the solid electrolyte. Then, the active area of each primary particle derived therefrom is multiplied by the average number of primary particles present in the secondary particle, thereby calculating the average active area of the positive electrode active material.

### Fourth Step

Next, rate characteristics of the all-solid-state battery are predicted from the derived average active area.

More specifically, the fourth step may predict that the all-solid-state battery has excellent rate characteristics when the derived average active area is 50 µm² or more and equal to or less than a threshold value.

In general, it is known that, when an active area, which is a contact area between a positive electrode active material and a solid electrolyte, has a value equal to or greater than a certain level, electrochemical characteristics such as capacity and rate characteristics are secured. However, research on an upper threshold value at which the electrochemical characteristics rather deteriorate has been insufficient.

The present inventors derived average active areas for positive electrode active materials for all-solid-state batteries having a specific range of average particle diameter, and experimentally studied the correlation between these average active areas and capacity or rate characteristics of all-solid-state batteries. As a result, the present inventors found that, in particular, controlling the average active area within a range equal to or less than an upper threshold value is important for maximizing rate characteristics. The present inventors believe that this is because the surface area of the positive electrode active material for an all-solid-state battery varies depending on the size of primary particles and the average particle diameter of secondary particles, and, when the surface area is too large, electrochemical activity deteriorates due to side reactions between the active material and the electrolyte solution. In particular, considering the issue of deterioration of rate characteristics of an all-solid-state battery due to low ionic conductivity of a solid electrolyte, derivation of the upper threshold value of the average active area is expected to play an important role as an index for selecting a high-quality positive electrode material for an all-solid-state battery.

In one embodiment, when the derived average radius of the primary particles is the area-based average radius and the derived average active area is the sphere-based average active area, the threshold value may be 110 µm².

In another embodiment, when the derived average radius of the primary particles is the area-based average radius and the derived average active area is the cube-based average active area, the threshold value may be 104 µm².

In another embodiment, when the derived average radius of the primary particles is the area-based average radius and the derived average active area is the regular icosahedron-based average active area, the threshold value may be 127 µm².

In another embodiment, when the derived average radius of the primary particles is the perimeter-based average radius and the derived average active area is the sphere-based average active area, the threshold value may be 103 µm².

In another embodiment, when the derived average radius of the primary particles is the perimeter-based average radius and the derived average active area is the cube-based average active area, the threshold value may be 98 µm².

In another embodiment, when the derived average radius of the primary particles is the perimeter-based average radius and the derived average active area is the regular icosahedron-based average active area, the threshold value may be 120 µm².

Hereinafter, embodiments of the present invention will be described in more detail through Examples. However, the following Examples are merely one preferred embodiment of the present invention, and the present invention is not limited by the following Examples.

### Preparation Example 1

### (1) Preparation of Positive Electrode Active Material for All-Solid-State Battery

### (Formation of Lithium Metal Oxide)

A Ni_{0.83}Co_{0.12}Mn_{0.05}(OH)₂ transition metal hydroxide precursor and LiOH·H₂O as a lithium raw material were mixed at a molar ratio of 1:1.02 to form a mixture.

1 kg of the mixture was charged into a tube furnace and calcined at a temperature of 730°C for 8 hours. During calcination, pure O₂ was supplied so that an O₂ concentration of 99% or more could be maintained, thereby forming a LiNi_{0.83}Co_{0.12}Mn_{0.05}O₂ lithium metal oxide.

### (Preparation of Coating Solution)

Subsequently, lithium was dissolved in dehydrated ethanol, and zirconium(IV) tetrapropoxide (70 wt.% in 1-propanol) was added and stirred, thereby preparing a coating solution containing lithium ions and zirconium ions. At this time, the concentration of zirconium ions in the coating solution was 0.11 mol/L.

### (Spraying of Coating Solution)

420 mL of the coating solution was sprayed onto 1 kg of the formed lithium transition metal oxide using a fluidized coating apparatus (MP-01, manufactured by POWREX) to perform a coating process.

### (Coating Heat Treatment)

Thereafter, the lithium transition metal oxide onto which the coating solution had been sprayed was charged into a saggar and then heat-treated at 300°C while supplying oxygen into a box-type electric furnace, thereby manufacturing a positive electrode active material in which a Li₂ZrO₃ amorphous coating layer was formed on the surface of the lithium transition metal oxide.

### (2) Manufacture of All-Solid-State Battery

75 wt% of the manufactured positive electrode active material, 22 wt% of an argyrodite solid electrolyte (Li₆PS₅Cl), and 3 wt% of Super C65 as a conductive material were well mixed with a solvent in which a small amount of binder was dissolved, thereby preparing a mixed paste. An electrode plate was manufactured using the mixed paste and dried, thereby manufacturing a composite electrode plate for a positive electrode.

100 mg of an argyrodite solid electrolyte (Li₆PS₅Cl) serving as a separator was first charged into a jig for evaluating an all-solid-state battery, pressed at 300 MPa or more to have a thickness of about 800 µm, and then a positive electrode plate was inserted on one surface thereof and secondarily pressed to manufacture a positive electrode part.

Thereafter, a Li-In alloy was inserted on the other surface, and an appropriate pressure was applied, thereby manufacturing a battery for evaluating an all-solid-state battery.

### Preparation Examples 2 to 13

Positive electrode active materials and all-solid-state batteries were manufactured in the same manner as in Example 1, except that the calcination temperature and calcination time were differently adjusted in the step of forming the lithium metal oxide.

Tables 1 to 3 below summarize results of Experimental Examples 1 and 2, which will be described later.

**[Table 1]**

| | Average Particle Diameter of Secondary Particles (D50, µm) | Average Radius of Primary Particles (µm) | | Average Number of Primary Particles |
|---|---|---|---|---|
| | | Area-Based | Perimeter-Based | (No.) |
| Preparation Example 1 | 4.18 | 0.24 | 0.24 | 256 |
| Preparation Example 2 | 3.93 | 0.21 | 0.2 | 348 |
| Preparation Example 3 | 3.86 | 0.23 | 0.22 | 276 |
| Preparation Example 4 | 3.93 | 0.22 | 0.2 | 305 |
| Preparation Example 5 | 3.93 | 0.22 | 0.22 | 321 |
| Preparation Example 6 | 3.96 | 0.22 | 0.21 | 358 |
| Preparation Example 7 | 3.9 | 0.23 | 0.23 | 322 |
| Preparation Example 8 | 3.77 | 0.26 | 0.25 | 306 |
| Preparation Example 9 | 4.18 | 0.26 | 0.25 | 296 |
| Preparation Example 10 | 3.89 | 0.26 | 0.25 | 310 |
| Preparation Example 11 | 3.96 | 0.23 | 0.23 | 367 |
| Preparation Example 12 | 3.77 | 0.26 | 0.25 | 310 |
| Preparation Example 13 | 3.85 | 0.26 | 0.25 | 300 |

**[Table 2]**

| | Average Active Area | | | | | |
|---|---|---|---|---|---|---|
| | r1 (Area)-Model 1 (Spherical) | r1 (Area)-Model 2 (Cubic) µm² | r1 (Area)-Model 3 (Regular Icosahedral) | r2 (Perimeter)-Model 1 (Spherical) | r2 (Perimeter)-Model 2 (Cubic) | r2 (Perimeter)-Model 3 (Regular Icosahedral) |
| | µm² | µm² | µm² | µm² | µm² | µm² |
| Preparation Example 1 | 95.2 | 90.9 | 110.9 | 94.6 | 90.3 | 110.1 |
| Preparation Example 2 | 101 | 96.5 | 117.7 | 85 | 81.2 | 99 |
| Prepar ation Example 3 | 91.3 | 87.1 | 106.3 | 80.6 | 76.9 | 93.8 |
| Preparation Example 4 | 90.4 | 86.3 | 105.3 | 80.5 | 76.9 | 93.7 |
| Preparation Example 5 | 96.2 | 91.9 | 112 | 95.5 | 91.2 | 111.2 |
| Preparation Example 6 | 107.7 | 102.8 | 125.4 | 100.1 | 95.5 | 116.5 |
| Preparation Example 7 | 111.1 | 106.1 | 129.4 | 105.1 | 100.4 | 122.4 |
| Preparation Example 8 | 128.6 | 122.8 | 149.7 | 124.7 | 119.1 | 145.3 |
| Preparation Example 9 | 123.5 | 117.9 | 143.8 | 116.3 | 111 | 135.4 |
| Preparation Example 10 | 134.7 | 128.6 | 156.8 | 117.4 | 112.1 | 136.7 |
| Preparation Example 11 | 118.4 | 113.1 | 137.9 | 126.6 | 120.9 | 147.4 |
| Preparation Example 12 | 134.7 | 128.6 | 156.8 | 117.4 | 112.1 | 136.7 |
| Preparation Example 13 | 123.1 | 117.5 | 143.3 | 121.7 | 116.2 | 141.7 |

**[Table 3]**

| | Initial Capacity | | | Rate Characteristics | | | | |
|---|---|---|---|---|---|---|---|---|
| | Charge | Discharge | Initial Efficiency | 0.1C | 0.5C | 1.0C | 0.5C/0.1C | 1.0C/0.1C |
| | mAh/g | mAh/g | % | mAh/g | mAh/g | mAh/g | % | % |
| Preparation Example 1 | 226.3 | 212.6 | 94.00% | 212 | 196.9 | 181.3 | 92.9 | 85.5 |
| Preparation Example 2 | 225.5 | 212.1 | 94.10% | 211.6 | 196.5 | 185.4 | 92.9 | 87.6 |
| Preparation Example 3 | 226.2 | 213.2 | 94.20% | 212.4 | 197.1 | 184.5 | 92.8 | 86.9 |
| Preparation Example 4 | 221.6 | 209.6 | 94.60% | 209.1 | 193.9 | 177 | 92.7 | 84.6 |
| Preparation Example 5 | 221.6 | 209.6 | 94.60% | 209.1 | 193.9 | 177 | 92.7 | 84.6 |
| Preparation Example 6 | 220.8 | 208.1 | 94.20% | 207.3 | 190.7 | 177.5 | 92 | 85.6 |
| Preparation Example 7 | 224.5 | 213.3 | 95.00% | 212.8 | 195.1 | 173.9 | 91.7 | 81.7 |
| Preparation Example 8 | 216.8 | 205.8 | 94.90% | 205.3 | 188.2 | 168.1 | 91.7 | 81.9 |
| Preparation Example 9 | 215.5 | 203 | 94.20% | 202.4 | 184.6 | 166 | 91.2 | 82 |
| Preparation Example 10 | 220.9 | 208 | 94.20% | 207.5 | 188.2 | 166.9 | 90.7 | 80.5 |
| Preparation Example 11 | 218.6 | 205.4 | 94.00% | 204.6 | 184 | 166.4 | 89.9 | 81.3 |
| Preparation Example 12 | 222.9 | 208.7 | 93.60% | 207.8 | 185.6 | 167.2 | 89.3 | 80.5 |
| Preparation Example 13 | 218.5 | 206.2 | 94.40% | 205.6 | 183.5 | 164.2 | 89.3 | 79.9 |

### Experimental Example 1: Analysis of Physical Properties of Positive Electrode Active Material

### (1) Evaluation of Average Particle Diameter (D50) of Secondary Particles

With respect to active material powder, a particle diameter corresponding to 50% of a cumulative volume was measured using a laser diffraction method.

### (2) Evaluation of Average Radius of Primary Particles and Evaluation of Average Number of Primary Particles in Secondary Particle

An SEM (scanning electron microscope) image was derived from the positive electrode active material sample prepared in the Preparation Example. The magnification of the SEM image was set to 15,000×.

Thereafter, an average radius of the primary particles and an average number of primary particles present in the secondary particle were derived from the SEM image. At this time, an area-based average radius and a perimeter-based average radius were each calculated for each Preparation Example.

Specifically, the area-based average radius was calculated by measuring, through image software, an area (pixel) occupied by each primary particle in the secondary particle in the SEM image derived from the first step, specifying a radius of a circle having the same area as the radius of each primary particle, and obtaining an average value of the radii of the individual primary particles in the secondary particle.

The perimeter-based average radius was calculated by measuring, through image software, a perimeter of each primary particle in the secondary particle in the SEM image derived from the first step, specifying a radius of a circle having the same perimeter as the radius of each primary particle, and obtaining an average value of the radii of the individual primary particles in the secondary particle.

In addition, the number of primary particles present in the secondary particle was calculated from the SEM image through image software. At this time, the number of primary particles means the number of primary particles positioned at a surface portion of the positive electrode active material observed on a two-dimensional SEM image, and does not mean the number of all primary particles actually present in the three-dimensional positive electrode active material.

Meanwhile, the average radius of the primary particles and the average number of primary particles present in the secondary particle were finally derived as average values of values measured for 10 arbitrary different secondary particles in the positive electrode active material sample.

### (3) Evaluation of Average Active Area

An average active area was derived from the derived average radius of the primary particles and the average number of primary particles present in the secondary particle. At this time, for each of the area-based average radius and the perimeter-based average radius derived from the second step, a sphere-based average active area, a cube-based average active area, and a regular icosahedron-based average active area were each calculated.

Referring to FIG. 3, the sphere-based average active area may be calculated by the following method. First, the average radius of the primary particles derived from the second step is assumed to be the radius of a spherical particle. Then, half of the total area of the spherical particle is assumed to be an active area directly contacting the solid electrolyte. Then, the active area of each primary particle derived therefrom is multiplied by the average number of primary particles present in the secondary particle, thereby calculating the average active area of the positive electrode active material.

Referring to FIG. 4, the cube-based average active area may be calculated by the following method. First, the average radius of the primary particles derived from the second step is assumed to be the length of one edge of a cube. Then, half of the total area of the cubic particle is assumed to be an active area directly contacting the solid electrolyte. Then, the active area of each primary particle derived therefrom is multiplied by the average number of primary particles present in the secondary particle, thereby calculating the average active area of the positive electrode active material.

Referring to FIG. 5, the regular icosahedron-based average active area may be calculated by the following method. First, the average radius of the primary particles derived from the second step is assumed to be the length of one edge of a regular icosahedron. Then, half of the total area of the regular icosahedral particle is assumed to be an active area directly contacting the solid electrolyte. Then, the active area of each primary particle derived therefrom is multiplied by the average number of primary particles present in the secondary particle, thereby calculating the average active area of the positive electrode active material.

### Experimental Example 2: Evaluation of Electrochemical Characteristics of All-Solid-State Battery

### (1) Evaluation of Initial Capacity and Initial Efficiency

A lithium secondary battery half-cell was manufactured and aged at 25°C for 12 hours, and then a charge/discharge test was performed at 30°C. For initial capacity evaluation, charging was performed with a constant current of 0.1C up to 4.25 V based on a reference capacity of 210 mAh/g, then switched to a constant voltage, and charging was performed until the termination current reached 0.05C. After a rest time of 10 minutes after charging, discharging was performed with a constant current of 0.1C based on a reference capacity of 200 mAh/g until the voltage reached 2.5 V.

### (2) Evaluation of Rate Characteristics

Output characteristics were evaluated by comparing an initial discharge capacity during 0.1C charge-0.1C discharge and an initial discharge capacity during 0.1C charge-1C/5C/10C discharge.

Referring to Tables 1 to 3, it was confirmed that the derived average active area of the positive electrode active material has a substantially linear-like correlation with, among electrochemical characteristics of an all-solid-state battery, particularly rate characteristics, and thus the correlation is very high.

Specifically, in the case of Preparation Examples 1 to 6, in which the area-based primary particle average radius-sphere-based average active area value was 110 µm² or less, it was confirmed that the 1.0C discharge capacity was 175 mAh/g or more, the 0.5C/0.1C rate characteristic was 92% or more, and the 1.0C/0.1C rate characteristic was 84% or more, which were implemented very excellently. In contrast, in the case of Preparation Examples 7 to 13 deviating from the above average active area value range, it was confirmed that the 1.0C discharge capacity, the 0.5C/0.1C rate characteristic, and the 1.0C/0.1C rate characteristic were lower than those of Preparation Examples 1 to 6.

In addition, in the case of Preparation Examples 1 to 6, in which the area-based primary particle average radius-cube-based average active area value was 104 µm² or less, it was confirmed that the 1.0C discharge capacity was 175 mAh/g or more, the 0.5C/0.1C rate characteristic was 92% or more, and the 1.0C/0.1C rate characteristic was 84% or more, which were implemented very excellently. In contrast, in the case of Preparation Examples 7 to 13 deviating from the above average active area value range, it was confirmed that the 1.0C discharge capacity, the 0.5C/0.1C rate characteristic, and the 1.0C/0.1C rate characteristic were lower than those of Preparation Examples 1 to 6.

In addition, in the case of Preparation Examples 1 to 6, in which the area-based primary particle average radius-regular icosahedron-based average active area value was 127 µm² or less, it was confirmed that the 1.0C discharge capacity was 175 mAh/g or more, the 0.5C/0.1C rate characteristic was 92% or more, and the 1.0C/0.1C rate characteristic was 84% or more, which were implemented very excellently. In contrast, in the case of Preparation Examples 7 to 13 deviating from the above average active area value range, it was confirmed that the 1.0C discharge capacity, the 0.5C/0.1C rate characteristic, and the 1.0C/0.1C rate characteristic were lower than those of Preparation Examples 1 to 6.

In addition, in the case of Preparation Examples 1 to 6, in which the perimeter-based primary particle average radius-sphere-based average active area value was 103 µm² or less, it was confirmed that the 1.0C discharge capacity was 175 mAh/g or more, the 0.5C/0.1C rate characteristic was 92% or more, and the 1.0C/0.1C rate characteristic was 84% or more, which were implemented very excellently. In contrast, in the case of Preparation Examples 7 to 13 deviating from the above average active area value range, it was confirmed that the 1.0C discharge capacity, the 0.5C/0.1C rate characteristic, and the 1.0C/0.1C rate characteristic were lower than those of Preparation Examples 1 to 6.

In addition, in the case of Preparation Examples 1 to 6, in which the perimeter-based primary particle average radius-cube-based average active area value was 98 µm² or less, it was confirmed that the 1.0C discharge capacity was 175 mAh/g or more, the 0.5C/0.1C rate characteristic was 92% or more, and the 1.0C/0.1C rate characteristic was 84% or more, which were implemented very excellently. In contrast, in the case of Preparation Examples 7 to 13 deviating from the above average active area value range, it was confirmed that the 1.0C discharge capacity, the 0.5C/0.1C rate characteristic, and the 1.0C/0.1C rate characteristic were lower than those of Preparation Examples 1 to 6.

In addition, in the case of Preparation Examples 1 to 6, in which the perimeter-based primary particle average radius-regular icosahedron-based average active area value was 120 µm² or less, it was confirmed that the 1.0C discharge capacity was 175 mAh/g or more, the 0.5C/0.1C rate characteristic was 92% or more, and the 1.0C/0.1C rate characteristic was 84% or more, which were implemented very excellently. In contrast, in the case of Preparation Examples 7 to 13 deviating from the above average active area value range, it was confirmed that the 1.0C discharge capacity, the 0.5C/0.1C rate characteristic, and the 1.0C/0.1C rate characteristic were lower than those of Preparation Examples 1 to 6.

Although preferred embodiments of the present invention have been described above, the present invention is not limited thereto, and various modifications can be made and practiced within the scope of the claims, the detailed description of the invention, and the accompanying drawings, and it is obvious that these also fall within the scope of the present invention.

Accordingly, the substantial scope of rights of the present invention should be defined by the appended claims and equivalents thereof.

## Claims

1. A method for predicting electrochemical characteristics of a positive electrode active material for an all-solid-state battery, comprising:
a first step of deriving an SEM (scanning electron microscope) image of the positive electrode active material for an all-solid-state battery in the form of secondary particles formed by aggregation of a plurality of primary particles;
a second step of deriving, from the SEM image, an average radius of the primary particles and an average number of primary particles present in the secondary particle;
a third step of deriving an average active area from the derived average radius of the primary particles and the average number of primary particles present in the secondary particle; and
a fourth step of predicting rate characteristics of the all-solid-state battery from the derived average active area.

2. The method for predicting electrochemical characteristics of a positive electrode active material for an all-solid-state battery of claim 1,
wherein, in the second step, the derived average radius of the primary particles is an area-based average radius calculated based on an area of the primary particles or a perimeter-based average radius calculated based on a perimeter of the primary particles.

3. The method for predicting electrochemical characteristics of a positive electrode active material for an all-solid-state battery of claim 2,
wherein, in the third step, the derived average active area is a sphere-based average active area derived by assuming the primary particles to be spherical, a cube-based average active area derived by assuming the primary particles to be cubic, or a regular icosahedron-based average active area derived by assuming the primary particles to be regular icosahedral.

4. The method for predicting electrochemical characteristics of a positive electrode active material for an all-solid-state battery of claim 3,
wherein the fourth step predicts that the all-solid-state battery has excellent rate characteristics when the derived average active area is 50 µm² or more and equal to or less than a threshold value.

5. The method for predicting electrochemical characteristics of a positive electrode active material for an all-solid-state battery of claim 4,
wherein, when the derived average radius of the primary particles is the area-based average radius and the derived average active area is the sphere-based average active area, the threshold value is 110 µm².

6. The method for predicting electrochemical characteristics of a positive electrode active material for an all-solid-state battery of claim 4,
wherein, when the derived average radius of the primary particles is the area-based average radius and the derived average active area is the cube-based average active area, the threshold value is 104 µm².

7. The method for predicting electrochemical characteristics of a positive electrode active material for an all-solid-state battery of claim 4,
wherein, when the derived average radius of the primary particles is the area-based average radius and the derived average active area is the regular icosahedron-based average active area, the threshold value is 127 µm².

8. The method for predicting electrochemical characteristics of a positive electrode active material for an all-solid-state battery of claim 4,
wherein, when the derived average radius of the primary particles is the perimeter-based average radius and the derived average active area is the sphere-based average active area, the threshold value is 103 µm².

9. The method for predicting electrochemical characteristics of a positive electrode active material for an all-solid-state battery of claim 4,
wherein, when the derived average radius of the primary particles is the perimeter-based average radius and the derived average active area is the cube-based average active area, the threshold value is 98 µm².

10. The method for predicting electrochemical characteristics of a positive electrode active material for an all-solid-state battery of claim 4,
wherein, when the derived average radius of the primary particles is the perimeter-based average radius and the derived average active area is the regular icosahedron-based average active area, the threshold value is 120 µm².

11. The method for predicting electrochemical characteristics of a positive electrode active material for an all-solid-state battery of claim 1,
wherein an average particle diameter (D50) of the secondary particles is 2 to 7 µm.
